# EUROPEAN PATENT APPLICATION

(11) **EP 2 187 652 A1**
(43) Date of publication of application: **19.05.2010**
(21) Application number: 08291055.5
(22) Date of filing: 12.11.2008
(51) Int. Cl.: H04Q 11/00

(54) **Method and equipment for operating passive optical networks**

(71) Applicant: Alcatel Lucent, 75008 Paris (FR)
(72) Inventor: Borne, Sophie, 91590 La Ferté Alais (FR); Zami, Thierry, 91300 Massy (FR)
(74) Representative: Croonenbroek, Thomas Jakob

(57) **Abstract**

The present invention refers to a method for operating at least a part of a passive optical network (PON), said network comprising a plurality of optical fibres, each optical fibre being connected on one end to a plurality of optical network units (ONUs) via an optical coupler, and on the other end to a switching device, said switching device being connected to a group of optical line terminals (OLTs) and allowing each optical fibre to be connected to an optical line terminals (OLTs) wherein the number of said optical line terminals (OLTs) is larger than the number of said optical fibres and wherein said switching device connects all said optical line terminals (OLTs) alternatively to said optical fibres according to an alternation principle.

## Description

### BACKGROUND OF THE INVENTION

The present invention relates to the field of optical communication networks and more specifically of passive optical networks.

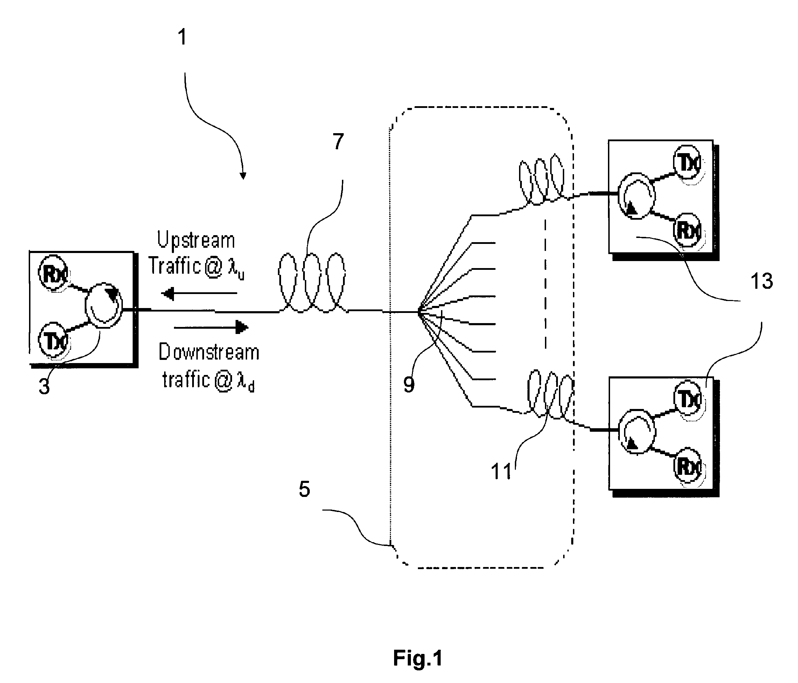

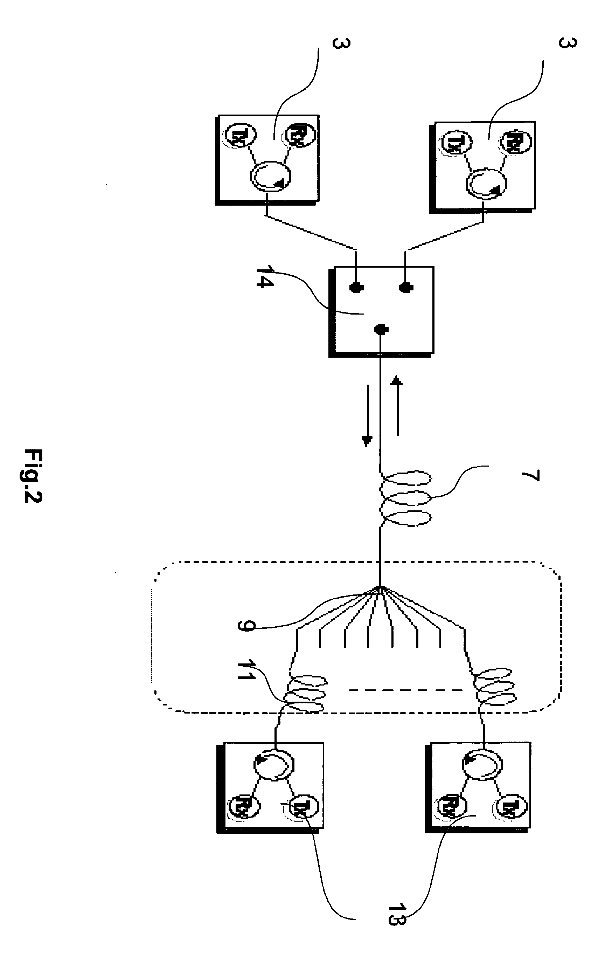

Fig.1 represents a diagram of a part of a simple passive optical network 1. It comprises an optical line terminal (OLT) 3 connected to a remote node 5 via a first type of bidirectional optical fibre 7. Said remote node comprises an optical coupler 9 connected to a plurality of a second type of bidirectional optical fibres 11 thus allowing signal transmission to a plurality of optical network units (ONUs) 13. The issue with such network configuration is that the functioning of a plurality of ONUs 13, between sixteen and thirty-two typically relies on a single OLT 3. Therefore, in case of dysfunction of OLT 3, all the ONUs 13 would be out of order. To overcome this issue, a first idea is to foresee a "protection" OLT which becomes active whenever the "active" OLT is out of order as described in Fig.2. The transfer from the "active" OLT to the "protection" OLT being achieved by an optical spatial switch 14. Nevertheless, this solution is expensive as it requires twice as much OLTs 3 to ensure the protection of the OLTs 3 in a passive optical network (PON) 1. Moreover, with such configuration, the "protection" OLT may stay idle during a long time so that one cannot be sure that it will operate correctly in case of need.

### SUMMARY OF THE INVENTION

It is therefore an object of the present invention to overcome the above cited drawbacks of the state of the art and provide a method for operating at least a part of a passive optical network (PON), said network comprising a plurality of optical fibres, each optical fibre being connected on one end to a plurality of optical network units (ONUs) via an optical coupler, and on the other end to a switching device, said switching device being connected to a group of optical line terminals (OLTs) and allowing each optical fibre to be connected to an optical line terminals (OLTs) wherein the number of said optical line terminals (OLTs) is larger than the number of said optical fibres and wherein said switching device connects all said optical line terminals (OLTs) alternatively to said optical fibres according to an alternation principle.

In another embodiment, the alternation principle for connecting the optical line terminals (OLTs) to the optical fibres is achieved according to a predetermined condition.

In a further embodiment, said predetermined condition corresponds to the absence of active connection on an optical line terminal (OLT).

In an additional embodiment, an optical line terminal (OLT) which is out of order is removed from the group of optical line terminals (OLTs) taking part in the alternation.

In a supplementary embodiment, the alternation is organized such that an optical line terminal (OLT) becomes idle whenever there is no active connection between said optical line terminal (OLT) and an optical fibre.

In a further embodiment, the alternation is organized as an iterative loop in which the optical line terminals (OLTs) become idle the ones after the others and wherein an idle optical line terminal (OLT) becomes connected when the subsequent optical line terminal (OLT) has no active connection with an optical fibre, said subsequent optical line terminal (OLT) becoming idle in its turn.

The present invention also refers to a switching device comprising means for connecting a plurality of optical fibres to a group of optical line terminals (OLTs) wherein the number of said optical line terminals (OLTs) is larger than the number of said optical fibres and wherein said means allow to connect each optical fibre to an optical line terminals (OLTs) and wherein said means connect all said optical line terminals (OLTs) alternatively to said optical fibres according to an alternation principle.

In another embodiment, said switching device comprises an optical spatial switch having a plurality of inputs, each input being connected to an optical line terminal (OLT) and a plurality of outputs, each output being connected to an optical fibre.

In an additional embodiment, said switching device comprises:
- a plurality of a first type of optical spatial switch having 2 inputs and one output, said output being connected to an optical fibre,
- a first and a second optical switch of a second type comprising a plurality of inputs and a plurality of outputs,
wherein the inputs of said first optical switch of said second type being connected to a first group of optical line terminal (OLTs), the inputs of said second optical switch of said second type being connected to a second group of optical line terminal (OLTs), the outputs of said first optical switch of said second type being connected to an input of said first type of optical switch and the outputs of said second optical switch of said second type being connected to the other input of said first type of optical switch.

The present invention also refers to a passive optical network comprising:
- a plurality of optical fibres,
- a plurality of optical network units (ONUs),
- a plurality of optical couplers,
- a plurality of optical line terminals (OLTs),
- a switching device,
wherein each optical fibre is connected on one end to a plurality of optical network units (ONUs) via an optical coupler, and on the other end to a switching device, said switching device being connected to a group of optical line terminals (OLTs) and allowing each optical fibre to be connected to an optical line terminals (OLTs), the number of said optical line terminals (OLTs) is larger than the number of said optical fibres and wherein said switching device connects all said optical line terminals (OLTs) alternatively to said optical fibres according to an alternation principle.

In another embodiment, said switching device comprises an optical spatial switch having a plurality of inputs, each input being connected to an optical line terminal (OLT) and a plurality of outputs, each output being connected to an optical fibre.

In a further embodiment, said switching device comprises:
- a plurality of a first type of optical spatial switch having two inputs and one output, said output being connected to an optical fibre,
- a first and a second optical switch of a second type comprising a plurality of inputs and a plurality of outputs,
wherein the inputs of said first optical switch of said second type being connected to a first group of optical line terminal (OLTs), the inputs of said second optical switch of said second type being connected to a second group of optical line terminal (OLTs), the outputs of said first optical switch of said second type being connected to an input of said first type of optical switch and the outputs of said second optical switch of said second type being connected to the other input of said first type of optical switch.

### BRIEF DESCRIPTION OF THE DRAWINGS

FIG.**1** is a diagram of a simple passive optical network (PON);
FIG.**2** is a diagram of a simple passive optical network comprising a "protection" optical line terminal;
FIG.**3** is a diagram representing a passive optical network according to the present invention;
FIG.**4** is a diagram representing a first detailed embodiment of a passive optical network (PON) according to the present invention;
FIG.**5** is a diagram representing a second detailed embodiment of a passive optical network (PON) according to the present invention;
FIG.**6** is a chart representing the status of the optical line terminals (OLTs) of a passive optical network (PON) at different times;

### DETAILED DESCRIPTION OF THE INVENTION

As used herein, the term "OLT" refers to the acronym optical line terminal;

As used herein, the term "ONU" refers to the acronym optical network unit;

As used herein, the term "PON" refers to the acronym passive optical network;

As used herein, the term "active connection" refers to the state of a link between two transmission devices when signals are transmitting;

As used herein, the term "idle OLT" refers to the state of an OLT not connected to an optical fibre (11) of the PON;

As used herein, the term "working OLT" refers to the state of an OLT being able to process signals exchanged with an optical fibre;

As used herein, the term "connected OLT" refers to the state of an OLT being connected to an optical fibre (11) of the PON;

As used herein, the term "active OLT" refers to the state of an OLT exchanging signals with an optical fibre;

The idea of the present invention is to reduce the cost of the OLT protection thanks to the reduction of the number of additional OLTs 3 required for the protection and to improve said protection in reducing the time during which an OLT 3 stay idle.

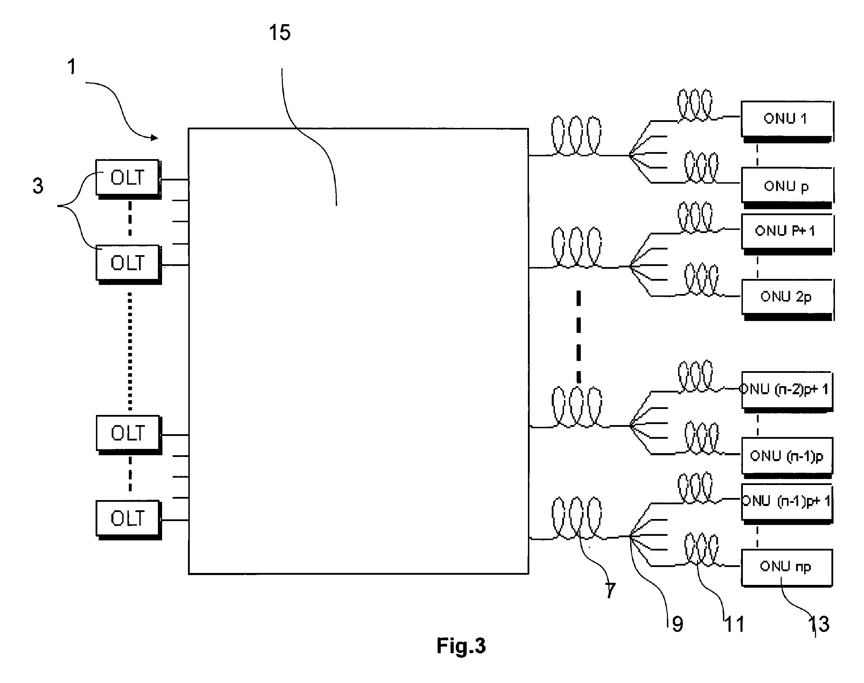

Fig.3 represents a diagram of a PON 1 according to the present invention. In said network, the number of OLTs 3 is larger than the number of optical fibres 7 but less than twice larger. For example, if the number of optical fibres 7 is one hundred, the number of OLTs 3 may be one hundred and two. Moreover, said optical fibres 7 are connected to said OLTs 3 by a switching device 15 such that each optical fibre 7 is connected to an OLT 3 and one OLT 3 is connected only to one optical fibre 7. Therefore, to each optical fibre 7 corresponds one OLT 3 and, as the number of OLT 3 is higher, some OLTs 3, two in the present example, remain unconnected. The unconnected OLTs are called "idle".
If a connected OLT becomes out of order, the corresponding optical fibre is connected to one of the idle OLTs, said idle OLT becoming a connected OLT.
Thus, the present invention allows providing OLT protection with a reduced number of OLTs 3 compared to the solutions of the state of the art.

Besides, as noticed previously, an OLT 3, as any electronic parts, which remains idle or unused for a long time may not work properly when it is used again. To prevent such issue, the idea is to use all the OLTs 3 alternatively. In order to prevent interruptions in the connections between the OLTs 3 and the optical fibres 7, the idea is to switch the connection from a connected OLT to an idle OLT when the connected OLT is not active. The switch of connection can be launched whenever an OLT 3 becomes inactive or when the subsequent OLT (with respect to a predefined order) becomes inactive. In the first case, a selection can be achieved in order to select between the different idle OLTs, the one becoming active. It can be for example the one being idle for the longest time. If an OLT 3 becomes out of order, said OLT 3 is obviously removed from the alternation in order to be repaired. As a consequence, the alternation is then achieved in the same way between the "working" OLTs, in the previous example, there would be only one idle OLT remaining.

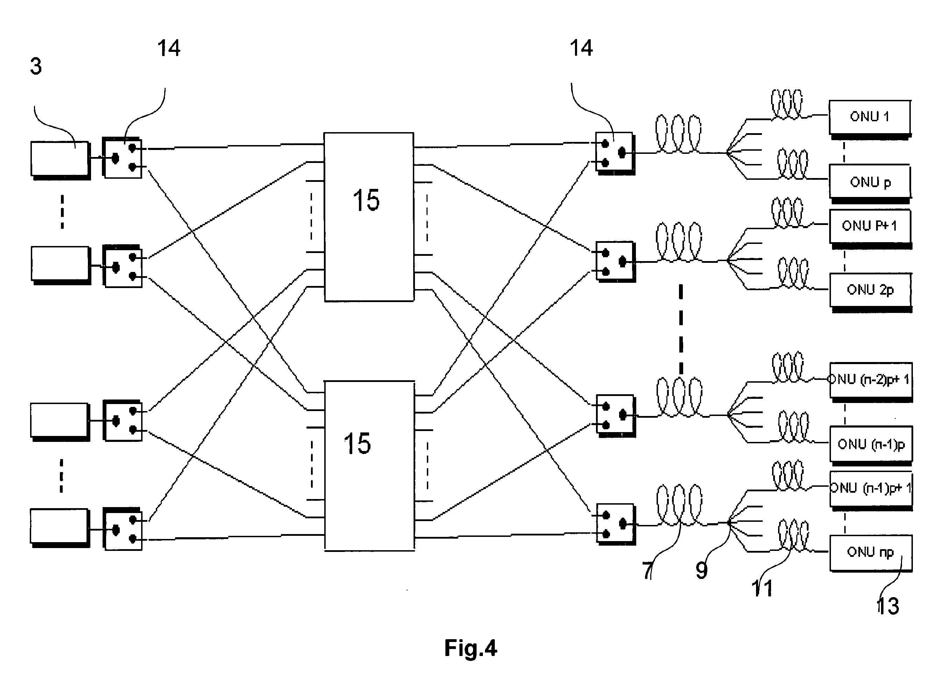

To achieve the protection as described previously, different embodiments of the switching device 15 can be realized. In Fig.3, the switching device 15 can be an optical spatial switch (OSS) with a plurality of inputs connected to the OLTs 3 and a plurality of outputs connected to the optical fibres 7 allowing thus to do all the commutations and connections necessary to ensure the functioning described previously. Nevertheless, with such configuration, a failure in the functioning of the OSS 15 would put the whole PON 1 out of order so that a second configuration comprising two OSSs 15 with one used as a protection OSS as presented in Fig.4 can be realized. In this configuration optical switch 14 allows to connect the optical fibres 7 and the OLTs 3 to one OSS 15 or the other. In this case, in the same way as for the protection of the OLTs 3, one can imagine an alternation between the OSSs 15 or one OSS 15 dealing with a part of the optical fibres 7 and the other OSS 15 with the other optical fibres 7. Thus, in case of failure of one of the OSSs, the PON 1 can still work normally with the remaining OSS 15.

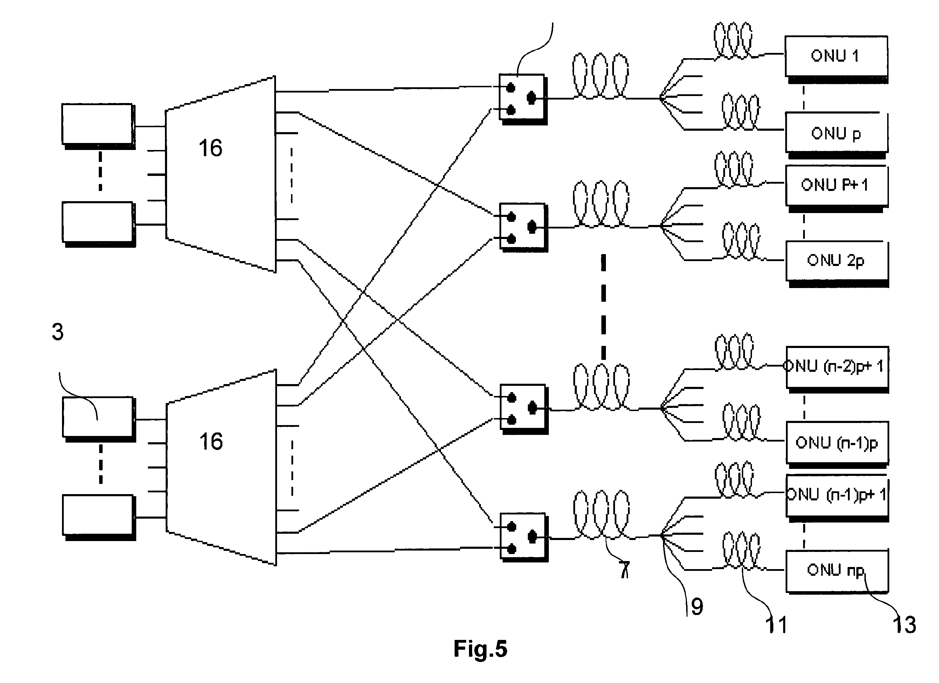

In Fig.5 is presented an alternative embodiment wherein half of the OLTs 3 is connected to a first OSS 16 and the other half of the OLTs 3 is connected to a second OSS 16 allowing thus to reduce the size and therefore the cost of the OSSs 16 while allowing the functioning of half of the network in case of failure of one of the OSSs 16.

To better understand the present invention, a description of the functioning of a PON having 8 OLTs (A, B, C, D, E, F, G, H) and 6 optical fibres will be done in the following paragraph.

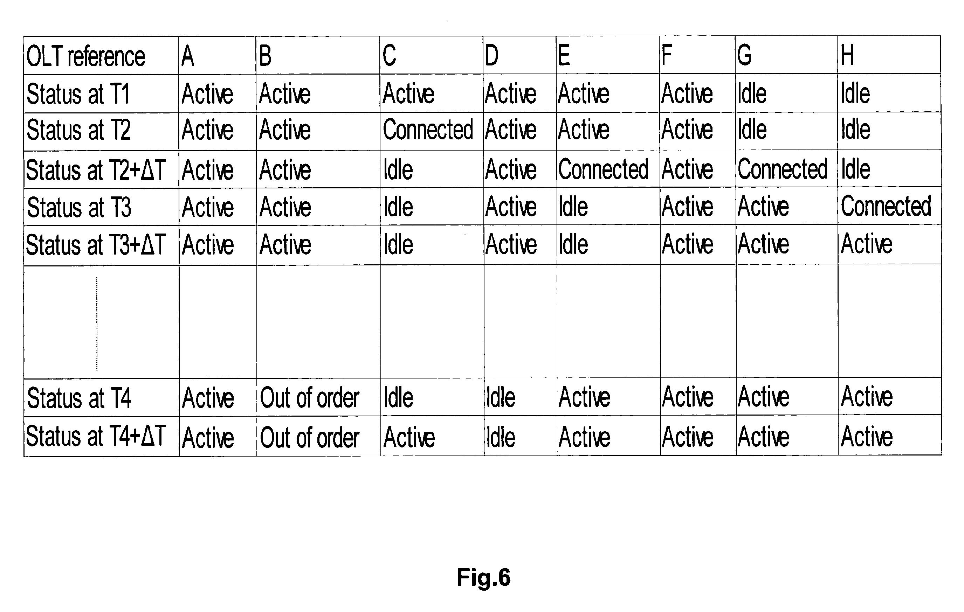

Fig.6 is a chart representing the status of the different OLTs at different times.
The OLTs may have four different statuses:
- an out of order status if they do not work properly,
and three working status:
- an idle status if they are not connected to an optical fibre 11,
- an active status if they are connected and exchanging signals with the optical fibres 11 and,
- a connected status if they are connected but not exchanging signals with the optical fibres 11.

At time T1, two OLTs are idle, the other ones being active. At time T2, the OLT C has no more exchanged signals to process, it is in a connected status. As a consequence, its connection is switched to the OLT G. Thus, at time T2+ΔT, OLT C is in an idle status and OLT G is in a connected status. In the same way, at time T3, OLT E is in a connected status so that the connection is switching to the OLT H. Then at T3+ΔT, OLT E is idle and OLT H is in a connected status. Thus, each time an active OLT becomes connected without exchanging signals, the connection is switched to an idle OLT. Such configuration allows the regular activity of all the OLTs and therefore to be sure that they are in a working condition. At time T4, OLT B breaks down and is therefore in an out of order status. The connection of OLT B is therefore switched to the OLT C which was in an idle status. Thus, at time T4+ΔT, seven OLTs remain in a working status so that only one OLT (OLT D) is in an idle status in order to ensure protection in case of failure of one of the other OLTs. As soon as OLT B will be repaired, there will be two idle OLTs again and the alternation with two idle OLTs will resume.

Thus, the present invention allows providing an efficient protection of the OLTs of a PON with a reduced number of "protection" OLTs and allows overcoming the issue of the OLTs staying idle during a long time thanks to the alternation in the connections between the OLTs and the optical fibres of the PON.

## Claims

1. Method for operating at least a part of a passive optical network (PON) (1), said network (1) comprising a plurality of optical fibres (7), each optical fibre (7) being connected on one end to a plurality of optical network units (ONUs) (13) via an optical coupler (9), and on the other end to a switching device (15), said switching device (15) being connected to a group of optical line terminals (OLTs) (3) and allowing each optical fibre (7) to be connected to an optical line terminals (OLTs) (3) wherein the number of said optical line terminals (OLTs) (3) is larger than the number of said optical fibres (7) and wherein said switching device (15) connects all said optical line terminals (OLTs) (3) alternatively to said optical fibres (7) according to an alternation principle.

2. Method for operating at least a part of a passive optical network (PON) (1) in accordance with claim 1 wherein the alternation principle for connecting the optical line terminals (OLTs) (3) to the optical fibres (7) is achieved according to a predetermined condition.

3. Method for operating at least a part of a passive optical network (PON) (1) in accordance with claim 2 wherein said predetermined condition corresponds to the absence of active connection on an optical line terminal (OLT) (3).

4. Method for operating at least a part of a passive optical network (PON) (1) in accordance with one of the previous claims wherein an optical line terminal (OLT) (1) which is out of order is removed from the group of optical line terminals (OLTs) (3) taking part in the alternation.

5. Method for operating at least a part of a passive optical network (PON) (1) in accordance with one of the previous claims wherein the alternation is organized such that an optical line terminal (OLT) (3) becomes idle whenever there is no active connection between said optical line terminal (OLT) (3) and an optical fibre (7).

6. Method for operating at least a part of a passive optical network (PON) (1) in accordance with one of the claims from 1 to 4 wherein the alternation is organized as an iterative loop in which the optical line terminals (OLTs) (3) become idle the ones after the others and wherein an idle optical line terminal (OLT) (3) becomes connected when the subsequent optical line terminal (OLT) (3) has no active connection with an optical fibre (7), said subsequent optical line terminal (OLT) (3) becoming idle in its turn.

7. Switching device (15) comprising means for connecting a plurality of optical fibres to a group of optical line terminals (OLTs) (3) wherein the number of said optical line terminals (OLTs) (3) is larger than the number of said optical fibres (7) and wherein said means allow to connect each optical fibre (7) to an optical line terminals (OLTs) (3) and wherein said means connect all said optical line terminals (OLTs) (3) alternatively to said optical fibres (7) according to an alternation principle.

8. Switching device (15) according to claim 7 wherein it comprises an optical spatial switch (15) having a plurality of inputs, each input being connected to an optical line terminal (OLT) (3) and a plurality of outputs, each output being connected to an optical fibre (7).

9. Switching device (15) according to claim 7 wherein it comprises:
- a plurality of a first type of optical spatial switch (14) having 2 inputs and one output, said output being connected to an optical fibre,
- a first and a second optical switch (16) of a second type comprising a plurality of inputs and a plurality of outputs, the inputs of said first optical switch (16) of said second type being connected to a first group of optical line terminal (OLTs), the inputs of said second optical switch (16) of said second type being connected to a second group of optical line terminal (OLTs), the outputs of said first optical switch (16) of said second type being connected to an input of said first type of optical switch (14) and the outputs of said second optical switch (16) of said second type being connected to the other input of said first type of optical switch (14).

10. Passive optical network (1) comprising:
- a plurality of optical fibres (7),
- a plurality of optical network units (ONUs) (13),
- a plurality of optical couplers (9),
- a plurality of optical line terminals (OLTs) (3),
- a switching device (15),
wherein each optical fibre (7) is connected on one end to a plurality of optical network units (ONUs) (13) via an optical coupler (9), and on the other end to a switching device (15), said switching device (15) being connected to a group of optical line terminals (OLTs) (3) and allowing each optical fibre (7) to be connected to an optical line terminals (OLTs) (3), the number of said optical line terminals (OLTs) (3) is larger than the number of said optical fibres (7) and wherein said switching device (15) connects all said optical line terminals (OLTs) (3) alternatively to said optical fibres (7) according to an alternation principle.

11. Passive optical network (1) in accordance with claim 10 wherein said switching device (15) comprises an optical spatial switch (15) having a plurality of inputs, each input being connected to an optical line terminal (OLT) (3) and a plurality of outputs, each output being connected to an optical fibre (7).

12. Passive optical network (1) in accordance with claim 10 wherein said switching device (15) comprises:
- a plurality of a first type of optical spatial switch (14) having two inputs and one output, said output being connected to an optical fibre (7),
- a first and a second optical switch (16) of a second type comprising a plurality of inputs and a plurality of outputs,
wherein the inputs of said first optical switch (16) of said second type being connected to a first group of optical line terminal (OLTs) (3), the inputs of said second optical switch (16) of said second type being connected to a second group of optical line terminal (OLTs) (3), the outputs of said first optical switch (16) of said second type being connected to an input of said first type of optical switch (14) and the outputs of said second optical switch (16) of said second type being connected to the other input of said first type of optical switch (14).
